Europäisches Patentamt

European Patent Office

Office européen des brevets

(19)

(11) Numéro de publication : **0 176 643**
**B1**

(12) **FASCICULE DE BREVET EUROPÉEN**

(45) Date de publication du fascicule du brevet :
06.07.88

(51) Int. Cl.⁴ : **F 15 B  7/00**, G 01 N 35/00

(21) Numéro de dépôt : **84401964.6**

(22) Date de dépôt : **02.10.84**

(54) Dispositif d'actionnement pour un automatisme comportant une pluralité d'organes mobiles combinés.

(43) Date de publication de la demande :
09.04.86 Bulletin 86/15

(45) Mention de la délivrance du brevet :
06.07.88 Bulletin 88/27

(84) Etats contractants désignés :
AT BE CH DE GB IT LI LU NL SE

(56) Documents cités :
EP-A- 0 088 679
DE-A- 3 301 916
FR-A- 1 187 238
FR-A- 1 539 674
FR-A- 2 547 417
GB-A- 2 135 737

(73) Titulaire : LE MATERIEL BIOMEDICAL Société à Responsabilité Limitée dite:
4 rue de Presbourg
F-75116 Paris (FR)

(72) Inventeur : Benajam, Alain Charles Albert
36 avenue Karl Marx
F-93000 Bobigny (FR)
Inventeur : Lachenal, Jean-Michel
25 avenue de la Paix
F-94600 Fresnes (FR)

(74) Mandataire : Bonnetat, Christian et al
Cabinet PROPI Conseils 23 rue de Léningrad
F-75008 Paris (FR)

## Description

La présente invention concerne un dispositif d'actionnement pour un automatisme comportant une pluralité d'organes mobiles combinés, c'est-à-dire montés mobiles les uns par rapport aux autres.

Pour entraîner les organes mobiles d'un tel automatisme, on utilise généralement des moteurs électriques, par exemple pas à pas.

Ces moteurs électriques sont « embarqués », c'est-à-dire portés respectivement par celui desdits organes mobiles par rapport auquel l'organe mobile qu'ils actionnent est monté.

Du fait qu'ils sont portés par des organes mobiles de l'automatisme, ces moteurs doivent être choisis aussi petits que possibles, afin de ne pas obérer la rapidité du fonctionnement de l'automatisme, ni rendre prohibitive la puissance nécessaire à ce fonctionnement. Cependant, même de petite taille, de tels moteurs électriques restent lourds et, de plus, leur fiabilité et leur puissance sont faibles. Les automatismes de ce type présentent donc une vitesse de fonctionnement, une fiabilité et une puissance limitées, tout en consommant une énergie relativement importante.

Pour remédier aux défauts de ces dispositifs connus, le brevet FR-A-1 187 238 décrit un dispositif d'actionnement pour un automatisme comportant une pluralité d'organes mobiles combinés. Ce dispositif d'actionnement comporte un maître-vérin hydraulique, dont le piston est commandé en translation, une pluralité de conduites hydrauliques reliées en parallèle au cylindre dudit maître-vérin, une pluralité d'électro-vannes, montées chacune sur l'une desdites conduites hydrauliques, un dispositif de commande desdites électro-vannes et une pluralité de vérins-esclaves hydrauliques, dont les cylindres sont chacun reliés à l'une desdites conduites hydrauliques et dont les pistons sont chacun reliés à un desdits organes mobiles.

Par ailleurs, le brevet DE-A-3 301 916 décrit un dispositif d'actionnement comportant un maître-vérin hydraulique, dont le piston est commandé en translation par des moyens du type à vis et écrou transformant le mouvement de rotation d'un moteur électrique unique en un mouvement de transformation.

Si l'on cherche à mettre en œuvre, dans le dispositif de FR-A-1 187 238, des moyens de transformation de mouvement semblables à ceux décrits dans DE-A-3 301 916, on se heurte à des difficultés dues aux jeux mécaniques.

La présente invention a pour objet de remédier à cet inconvénient et d'indiquer un dispositif d'actionnement permettant de rendre l'automatisme rapide, précis, fiable et puissant sans dépense d'énergie importante.

A cette fin, selon l'invention, le dispositif d'actionnement pour un automatisme comportant une pluralité d'organes mobiles combinés, ce dispositif d'actionnement comportant un maître-vérin hydraulique dont le piston est commandé en translation, une pluralité de conduites hydrauliques reliées en parallèle au cylindre dudit maître-vérin, une pluralité d'électro-vannes montées chacune sur l'une desdites conduites hydrauliques, un dispositif de commande desdites électro-vannes et une pluralité de vérins-esclaves hydrauliques dont les cylindres sont chacun reliés à l'une desdites conduites hydrauliques et dont les pistons sont chacun reliés à un desdits organes mobiles, est caractérisé en ce qu'il comporte un moteur électrique unique, par exemple du type pas-à-pas, susceptible de tourner dans les deux sens de rotation et des moyens pour transformer le mouvement de rotation dudit moteur électrique en un mouvement de translation, en ce que lesdits moyens de transformation de mouvement commandent la translation du piston dudit maître-vérin hydraulique, en ce qu'une source de fluide sous pression est reliée par l'intermédiaire d'une pluralité de liaisons aux cylindres des vérins-esclaves, du côté du piston de ceux-ci opposé aux conduites de liaison du maître-vérin, et en ce que chaque vérin esclave est relié à une source de fluide sous pression atmosphérique, du côté de l'arrivée du fluide venant du maître-vérin, la liaison entre la source et lesdits vérins-esclaves étant commandée par des électro-vannes sous la dépendance du dispositif de commande.

Ainsi, lorsque le piston du maître-vérin hydraulique se déplace sous l'action du moteur électrique et des moyens de transformation de mouvement, il en résulte un mouvement correspondant du piston de celui ou de ceux des vérins esclaves (et donc de l'organe mobile qui y est relié) dont l'électrovanne associée est ouverte par ledit dispositif de commande.

On remarquera que, dans le dispositif d'actionnement selon l'invention, le moteur électrique, les moyens de transformation de mouvement, le maître-vérin hydraulique, les électro-vannes et le dispositif de commande peuvent être montés à poste fixe et que seuls, éventuellement, les vérins-esclaves doivent être montés sur l'une des parties mobiles de l'automatisme. Dans ce cas, ils sont reliés aux électro-vannes par des portions de conduites souples. Il est alors possible de choisir un moteur électrique de dimension importante et donc fiable, puissant et performant.

Si de façon connue, les moyens de transformation de mouvement sont du type à vis et écrou, on est sûr, grâce à la source de fluide sous pression reliée aux cylindres des vérins-esclaves, du côté du piston de ceux-ci opposé aux conduites de liaison du maître-vérin, que, dans les deux sens de translation des pistons des vérins maîtres et esclaves, ce sont les mêmes faces du filet de la vis et du filet de l'écrou qui sont en appui l'une contre l'autre, de sorte que le jeu vis-écrou est annulé et que l'on compte le même nombre de pas du moteur dans les deux sens de rotation de celui-ci pour un aller et retour du piston du maître-vérin. En effet, la pression exercée par cette source de fluide sur le piston des vérins esclaves et donc sur le piston du maître-vérin (par l'intermédiaire du fluide hydraulique) permet, au retour, de précontraindre ledit écrou, en direction du moteur.

On remarquera qu'ainsi, dans le dispositif selon l'invention, les différents organes mobiles reviennent automatiquement à une position de repos déterminée en fin de cycle, correspondant à la position de fin de course des pistons des vérins-esclaves repoussés par le fluide sous pression de ladite source.

Le dispositif selon l'invention est susceptible de nombreuses applications. Il est toutefois particulièrement approprié à être mis en œuvre dans un dispositif pour la détection et la quantification d'agglutinats susceptibles d'être formés, sous l'action d'au moins un réactif, par des particules en suspension dans un liquide, par exemple du type utilisé en immunohématologie, notamment en vue de la détermination des groupes sanguins.

Un tel dispositif connu pour la détection et la quantification d'agglutinats utilise des récipients dont au moins les fonds sont transparents, et peut mettre en œuvre, pour détecter et quantifier des agglutinats susceptibles d'être formés, sous l'action d'au moins un réactif liquide, par des particules en suspension dans des doses de liquides à tester se trouvant dans lesdits récipients, un agencement linéaire d'une pluralité d'éléments photosensibles observant par transparence les fonds desdits récipients contenant les éventuels agglutinats en balayant lesdits fonds desdits récipients, de façon à former $n \times m$ points d'observation répartis selon une surface rectangulaire ou carrée occupant la plus grande partie de la surface du fond de chaque récipient. De tels récipients peuvent être constitués d'alvéoles répartis selon des rayons d'un disque horizontal transparent pouvant tourner autour de son axe vertical et un bras oscillant tournant autour d'un axe vertical, susceptible d'être levé et abaissé et pourvu de moyens de prélèvement et de restitution de doses liquides peut être prévu pour prélever de telles doses dans des réservoirs à réactifs et à liquides à tester et les amener dans lesdits alvéoles du disque tournant, tandis que ledit agencement linéaire d'éléments photosensibles est disposé à poste fixe orthogonalement à un diamètre du disque transparent et que l'axe de rotation du disque est monté mobile en translation orthogonalement audit agencement linéaire d'éléments photosensibles.

Ainsi, par l'intermédiaire de ses moyens de prélèvement et de restitution de doses liquides, qui peuvent par exemple être des seringues, le bras oscillant et coulissant peut introduire dans chaque alvéole du disque tournant un liquide à tester et le réactif correspondant. Après réaction, chaque alvéole est examiné par l'agencement d'éléments photosensibles au cours de la translation de l'axe du disque, translation dont l'amplitude est suffisante pour que tous les alvéoles d'un rayon du disque soient observés, chacun en m pas.

Par ailleurs, l'agencement linéaire d'éléments photosensibles peut être disposé orthogonalement au plan vertical passant par les axes verticaux du disque transparent et du bras oscillant, du côté de l'axe du disque opposé audit bras oscillant, de sorte que le disque doit effectuer une rotation de 180° pour qu'un rayon d'alvéoles chargés en doses de liquides à tester et en réactif puisse être lu par ledit agencement.

Dans un tel automatisme, conformément à la présente invention, on prévoit que le coulissement dudit bras oscillant le long de l'axe vertical, la rotation dudit bras autour dudit axe, l'actionnement des moyens de prélèvement et de restitution des doses liquides et la translation de l'axe de rotation du disque sont effectués par quatre vérins-esclaves.

Les figures du dessin annexé feront bien comprendre comment l'invention peut être réalisée.

La figure 1 donne le schéma synoptique du dispositif d'actionnement selon l'invention.

La figure 2 est une vue d'ensemble en perspective, avec arrachement partiel, d'une installation automatique de reconnaissance de groupe sanguin mue par le dispositif d'actionnement selon l'invention.

La figure 3 est une vue de dessus simplifiée d'une partie de l'installation de la figure 2.

La figure 4 est une vue de dessus d'un disque à alvéoles utilisé dans le dispositif selon l'invention.

La figure 5 illustre schématiquement en perspective le bras oscillant et coulissant de l'installation des figures 2 et 3 et sa motorisation.

La figure 6 illustre schématiquement la rotation du bras oscillant.

Les figures 7 et 8 sont des coupes respectivement selon les lignes VII-VII et VIII-VIII de la figure 3.

La figure 9 illustre schématiquement le processus de lecture des agglutinats.

Sur ces figures des références identiques désignent des éléments identiques.

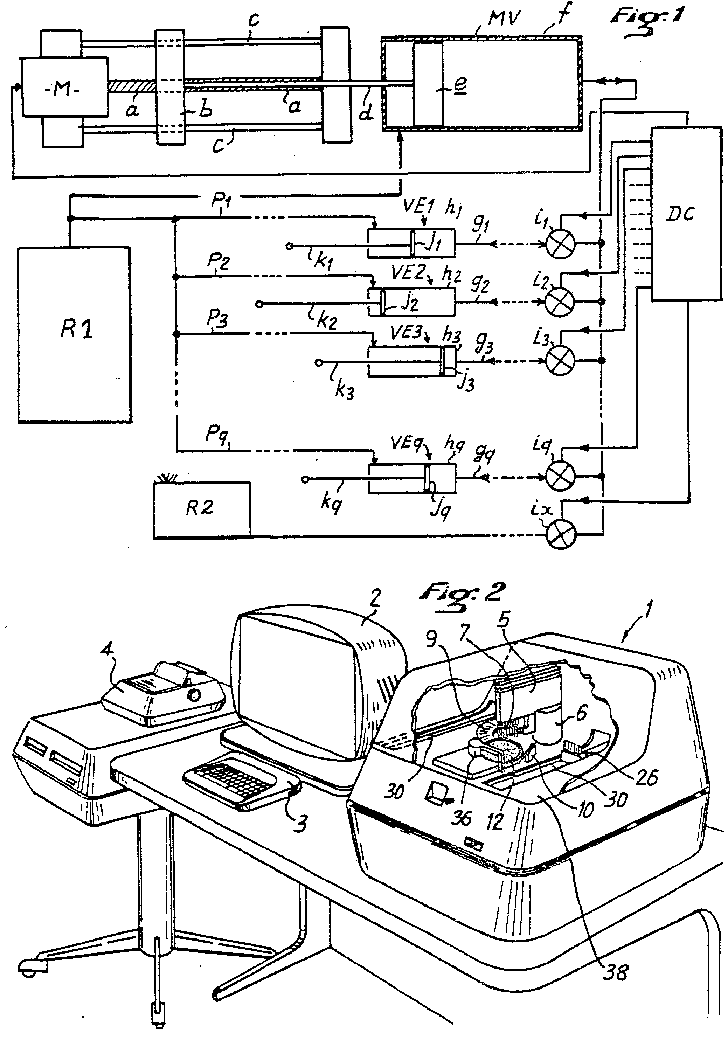

Le dispositif d'actionnement selon l'invention, montré par la figure 1, comporte un dispositif de commande DC et un moteur électrique pas-à-pas M qui est susceptible de tourner dans les deux sens de rotation et dont l'arbre de sortie est constitué par une vis a. Un écrou b, empêché de tourner par des guides de coulissement c, est en prise avec la vis a. Cet écrou b est relié par une tige d, avec le piston e d'un maître-vérin MV dont le cylindre f est empli d'un liquide hydraulique et est relié, par une pluralité de conduites $g_1$, $g_2$, $g_3$, ... $g_q$ en parallèle, aux cylindres $h_1$, $h_2$, $h_3$, ... $h_q$ d'une pluralité de vérins-esclaves $VE_1$, $VE_2$, $VE_3$, ... $VE_q$. Sur chacune des conduites $g_1$ à $g_q$ est montée une électro-vanne à trois voies $i_1$ à $i_q$, commandées par le dispositif de commande électronique DC. Celui-ci commande lesdites électro-vannes $i_1$ à $i_q$ indépendamment les unes des autres, et éventuellement, de façon séquentielle selon un cycle.

Les vérins-esclaves VE$_1$ à VE$_q$ sont chacun pourvus d'un piston j$_1$ à j$_q$ relié par une tige k$_1$ à k$_q$ à un organe mobile (non représenté sur la figure 1) à mouvoir.

La capacité en liquide hydraulique du cylindre f du maître-vérin MV est au moins égale à la somme des capacités des cylindres h$_1$ à h$_q$ des vérins esclaves VE$_1$ à VE$_q$. Par ailleurs, le dispositif de la figure 1 comporte un réservoir R1 de fluide sous pression (gaz ou liquide) relié par une pluralité de conduites p1 à pq, aux cylindres h1 à hq des vérins-esclaves VE1 à VEq, respectivement, du côté du piston j1 à jq opposé aux conduites g1 à gq. Le réservoir R1 est également relié au cylindre f du maître-vérin MV du côté du piston e opposé aux électrovannes i1 à iq. Le dispositif de la figure 1 comporte de plus un réservoir R2 contenant une réserve de liquide hydraulique à la pression atmosphérique. Chaque vérin esclave VE1 à VEq et le maître-vérin MV peuvent être reliés au réservoir R2 par l'intermédiaire des électrovannes i1 à iq et d'une électrovanne ix, également commandée par le dispositif de commande DC.

Ainsi, lorsque le moteur M tourne dans le sens pour lequel l'écrou b se déplace de la gauche vers la droite sur la figure 1, le piston e du maître-vérin M se déplace comme ledit écrou.

Par suite, du liquide hydraulique est chassé dans les conduites g1 à gq et les pistons j1 à jq de ceux des vérins esclaves VE1 à VEq dont l'électro-vanne correspondante i1 à iq est ouverte par le dispositif de commande DC sont déplacés vers la gauche de la figure à l'encontre de l'action de la pression du fluide du réservoir R1. Les organes mobiles liés aux tiges de piston k1 à kq correspondantes sont donc déplacés dans un premier sens.

En revanche, lorsque le moteur M tourne dans le sens pour lequel l'écrou b se déplace de la droite vers la gauche sur la figure 1, les pistons j1 à jq de ceux des vérins-esclaves VE1 à VEq dont l'électro-vanne i1 à iq est ouverte par le dispositif DC sont déplacés vers la droite de la figure sous l'action conjuguée de l'aspiration du piston e du maître-vérin MV et de la poussée du fluide sous pression de la source R1. Les organes mobiles liés aux tiges de pistons k1 à kq correspondants sont donc déplacés dans le sens opposé au premier.

Les électro-vannes i1 à iq et ix permettent par ailleurs de mettre les vérins MV et VE1 à VEq en communication avec la source R2 dont le fluide est à la pression atmosphérique. Ainsi :

il est possible de remplir indépendamment chaque vérin lors d'une opération initiale de purge du circuit hydraulique ;

il est possible d'initialiser mécaniquement tous les vérins à la fin de chaque cycle ;

cette initialisation permet de s'affranchir des variations de masse volumique du fluide hydraulique et donc des variations de déplacement, lors de changement de température.

Bien entendu, le dispositif de commande DC coordonne dans le temps, de façon conforme au cycle à réaliser, la commande des électro-vannes ix et i1 à iq, ainsi que la rotation du moteur M.

L'installation pour la reconnaissance des groupes sanguins, montrée par la figure 2, comporte un dispositif 1 pour la détection et la quantification d'agglutinats, associé à un dispositif de visualisation 2, à un dispositif de commande 3 et à un dispositif d'impression 4. L'ensemble de l'installation est pilotée par un microprocesseur (non représenté) selon un processus non décrit ci-après. Une partie de ce microprocesseur constitue le dispositif de commande DC de la figure 1.

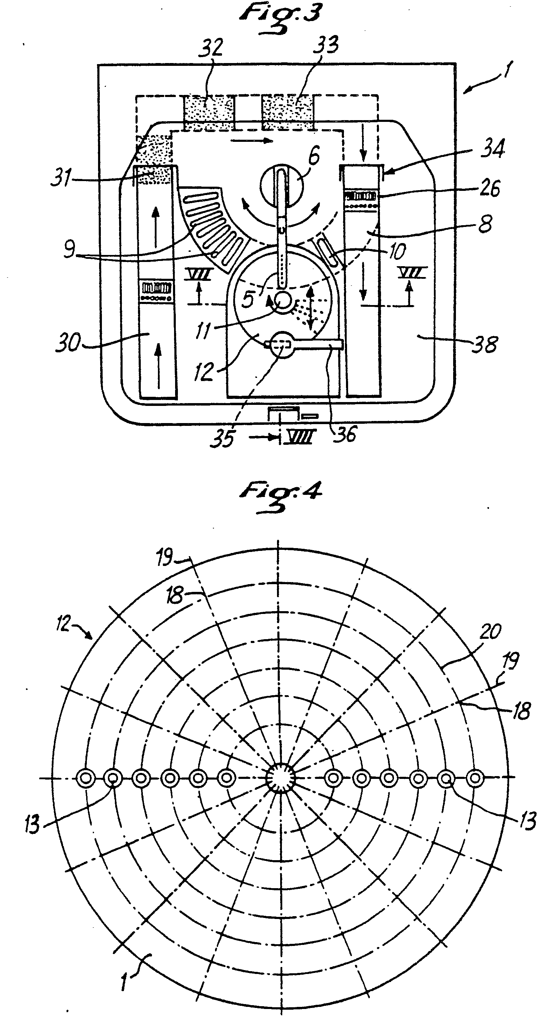

Comme le montre également la figure 3, le dispositif 1 comporte un bras oscillant horizontal 5 susceptible de tourner autour d'un axe vertical 6, ainsi que de se lever et de s'abaisser verticalement. Le bras 5 porte une pluralité de seringues verticales 7, dont les pistons peuvent être actionnés pour aspirer ou refouler un liquide. Lorsque le bras 5 oscille autour de l'axe vertical 6, les seringues 7 balayent une zone annulaire 8.

Dans cette zone annulaire 8 sont prévus des récipients à réactifs 9, dans chacun desquels les seringues verticales 7 peuvent prélever un réactif, et un récipient de rinçage 10.

Par ailleurs, le dispositif 1 comporte un axe vertical 11 susceptible d'entraîner en rotation un disque 12 de matière transparente dans lequel sont pratiqués des alvéoles 13.

Les alvéoles 13 du disque 12 sont répartis en une pluralité de points 18 se trouvant à l'intersection de rayons 19 et de cercles concentriques 20.

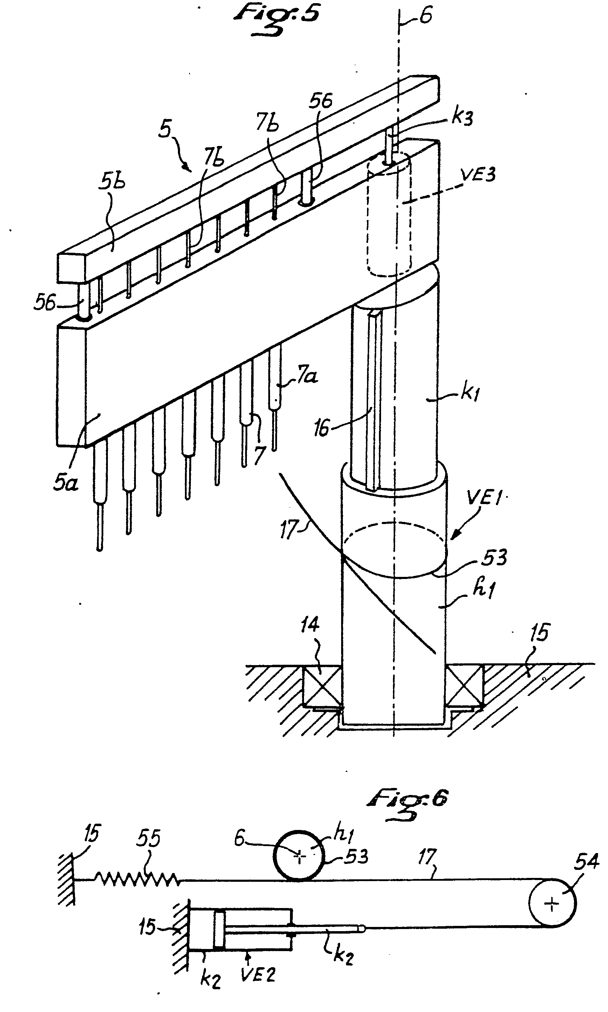

A des fins de clarté du dessin, sur la figure 4, seuls quelques alvéoles 13 ont été représentés.

La zone annulaire 8 de balayage des seringues 7 coupe le disque 12 de sorte qu'il est possible de remplir tous les alvéoles 13 disposés sur un rayon 19 du disque 12, en doses de réactifs provenant des réservoirs 9 en introduisant les aiguilles de seringues 7 dans lesdits alvéoles par abaissement desdites seringues. De la même façon, il est possible d'introduire dans les récipients 13 des doses de liquides provenant de réservoirs 26 se trouvant dans la zone 8.

Les réservoirs 26 contiennent des échantillons de sang provenant de donneurs. Ils sont introduits dans le dispositif 1 par un convoyeur 30 qui les fait passer successivement à différents postes de traitement 31, 32 et 33, avant de les amener au poste 34 où les seringues 7 du bras 5 peuvent prélever le liquide qu'ils contiennent.

Ainsi, chaque alvéole 13 du disque 12 peut servir de récipient de réaction entre un liquide provenant d'un réservoir 26 et un réactif provenant d'un réservoir 9.

Pour ce faire, on voit donc que le bras oscillant 5 doit pouvoir tourner autour de son axe vertical, être abaissé et levé le long dudit axe vertical et commander l'actionnement des seringues 7. Les figures 5 et 6 illustrent un mode de réalisation conforme à l'invention permettant d'obtenir ces résultats.

Comme on peut le voir, le bras oscillant 5 est supporté par le vérin-esclave VE1, disposé verticalement de façon que son cylindre h1 puisse tourner autour de l'axe vertical 6 grâce à un système de palier 14 lui permettant le mouvement de rotation par rapport au bâti 15 de l'appareil 1.

Le bras oscillant 5 est porté par la tige k1 du piston dudit vérin-esclave VE1. Par ailleurs, un système de nervure et de rainure 16 empêche la tige k1 de tourner par rapport au cylindre h1.

Ainsi, grâce au vérin-esclave VE1, le bras 5 peut être levé et abaissé parallèlement à l'axe vertical 6.

De plus, un lien 17 fait une boucle 53 autour du cylindre h1 du vérin-esclave VE1 et est lié, à l'une de ses extrémités à la tige de piston k2 du vérin-esclave VE2 (éventuellement via une poulie de renvoi 54) et, à son autre extrémité, audit bâti 15, par l'intermédiaire d'un ressort de traction 55. Le cylindre h2 du vérin VE2 est lié au bâti 15 (voir la figure 6).

Ainsi, grâce au vérin-esclave VE2 et au lien 17, le bras 5 peut tourner autour de l'axe vertical 6, la boucle 53 roulant avec frottement sur le cylindre h1 du vérin VE1 sous l'action combinée du vérin VE2 et du ressort 55.

En outre, comme le montre la figure 5, le bras 5 comporte une partie 5a, solidaire de la tige k1 du vérin-esclave VE1 et portant les corps 7a des seringues 7, et une partie mobile 5b, pouvant coulisser verticalement par rapport à la partie fixe 5a, grâce à des guides de coulissement 56 et solidaire des tiges 7b des pistons desdites seringues 7. Le vérin-esclave VE3 est porté par la partie fixe 5a, tandis que la partie mobile 5b est reliée à la tige k3 dudit vérin-esclave VE3.

Ainsi, grâce au vérin-esclave VE3, les seringues 7 peuvent être actionnées pour prélever et refouler des doses liquides.

Pour examiner le résultat de l'agglutination qui peut résulter des réactions dans les alvéoles 13, le dispositif 1 comporte une barrette 35 de diodes CCD, disposée sous le disque 12 en regard d'un dispositif d'éclairage 36. La barrette 35 et le dispositif d'éclairage 36 sont opposés au bras 5 par rapport à l'axe 11 et la barrette 35 est orthogonale au plan vertical défini par les axes 6 et 11.

La barrette 35 examine par transparence le fond 25 de chaque alvéole 13 selon m observations décalées chacune d'un pas. Pour que tous les alvéoles 13 d'un rayon 19 du disque 12 puissent être examinés chacun en m pas, l'axe 11 dudit disque est rendu mobile en translation horizontale, orthogonalement à ladite barrette 35.

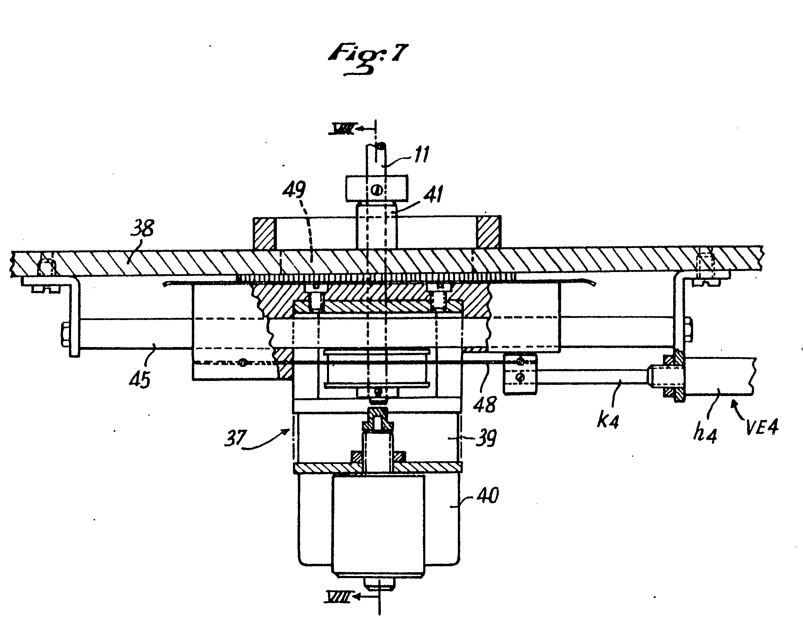

A cette fin, les figures 7 et 8 montrent que l'axe 11 du disque 12 est solidaire d'un chariot 37 mobile par rapport à la plaque de base 38 du dispositif, solidaire du bâti 15. Ce chariot 37 comporte un bâti 39 portant un moteur 40 et un palier lisse 41 pour l'axe 11. L'arbre de sortie du moteur 40 entraîne en rotation une poulie 42 qui est reliée à une poulie 43 calée sur l'axe 11, par l'intermédiaire d'une courroie crantée 44. Le chariot 37 est guidé en translation par un rail 45 et il se déplace sous l'action du vérin-esclave VE4, dont la tige de piston k4 est reliée au chariot 37 par une tige 48, tandis que le cylindre h4 dudit vérin est solidaire de la plaque 38.

Ainsi, l'axe 11 peut coulisser dans une fente 49, de la plaque de base 38, parallèle au rail 45 et orthogonale à la barrette 35 de diodes CCD.

Le chariot 37 peut porter de plus un vibreur 49 destiné à animer épisodiquement, à l'encontre de l'action d'un ressort 50, l'axe 11 d'un mouvement alternatif parallèlement à son axe, afin d'agiter éventuellement le liquide contenu dans les alvéoles 13 du disque 12.

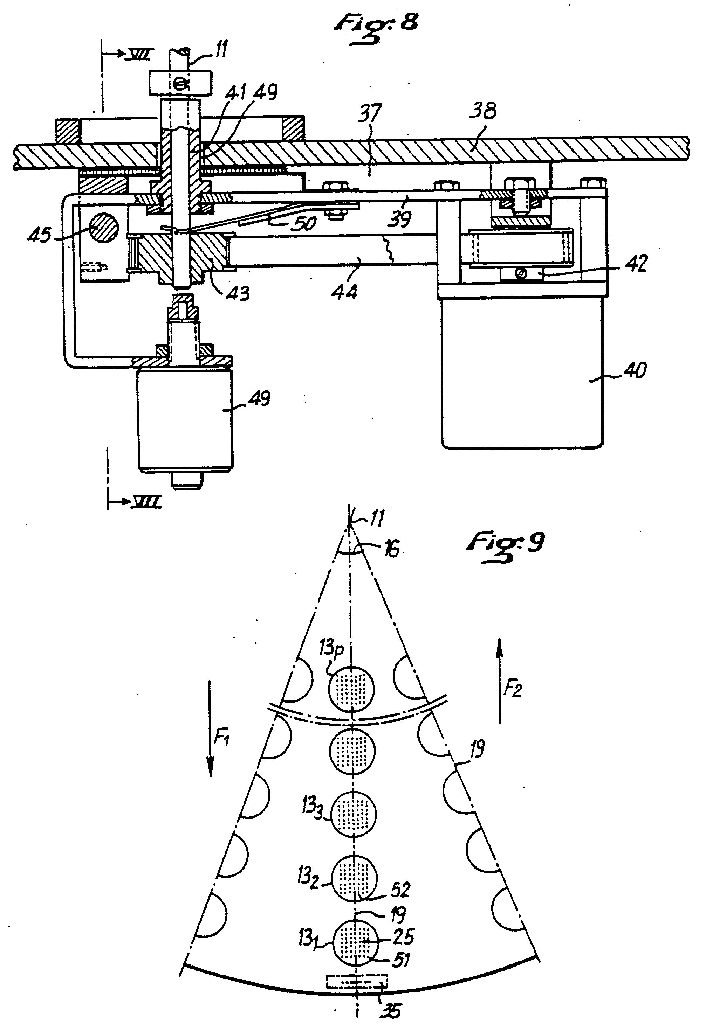

Ainsi, quand les alvéoles $13_1$ à $13_p$ du rayon 19 se trouvant dans le plan défini par les axes 6 et 11 doivent être lus par l'agencement 35 pour détecter et quantifier les agglutinations (voir la figure 9), le disque 12 est avancé par le vérin VE4 dans le sens de la flèche F1 pour que l'agencement 35 soit à l'aplomb de la limite externe 51 du champ 25 du fond du premier alvéole $13_1$. Puis, pas à pas, le vérin VE4 est actionné m fois pour que les n éléments photosensibles de l'agencement 35 examine en $n \times m$ points ledit champ 25. Lorsque la lecture du champ 25 de l'alvéole $13_1$ est terminée, le vérin VE4 déplace l'axe 11, toujours dans le sens $F_1$, de façon que la limite externe 52 du champ 25 du fond du second alvéole $13_2$ arrive à l'aplomb des éléments photosensibles de l'agencement 35. Ce second alvéole $13_2$ est lu de façon identique et le processus se continue jusqu'à la lecture complète de l'alvéole $13_p$.

Après celle-ci, le vérin VE4 ramène l'axe 11 dans sa position initiale (flèche F2).

On voit ainsi que le fonctionnement du dispositif d'analyse 1 de la figure 2 peut être réalisé à l'aide de quatre vérins-esclaves VE1 à VE4 du dispositif de la figure 1. Bien entendu, les vérins VE1 à VE4 peuvent être portés par des parties mobiles, le reste du dispositif, à savoir le moteur M, le système a à d, le maître-vérin MV, le dispositif de commande DC, les électro-vannes $i_1$ à $i_4$, et les réservoirs R1 et R2 pouvant être disposés à poste fixe sur le bâti 15. Les vérins VE1 à VE4 sont reliés aux électrovannes $i_1$ à $i_4$ par des conduites souples.

## Revendications

1. Dispositif d'actionnement pour un automatisme comportant une pluralité d'organes mobiles combinés, ce dispositif d'actionnement comportant un maître-vérin hydraulique (MV) dont le piston (e) est commandé en translation, une pluralité de conduites hydrauliques (g1 à gq) reliées en parallèle au cylindre dudit maître-vérin (MV), une pluralité d'électro-vannes ($i_1$ à $i_q$) montées chacune sur l'une desdites conduites hydrauliques, un dispositif de commande (DC) desdites électro-vannes et une pluralité de vérins-esclaves hydrauliques (VE$_1$ à VE$_q$) dont les cylindres ($h_1$ à $h_q$) sont chacun reliés à l'une desdites conduites hydrauliques et dont les pistons ($j_1$ à $j_q$) sont chacun reliés à un desdits organes mobiles, caractérisé en ce qu'il comporte un moteur électrique unique (M), par exemple du type pas-à-pas, susceptible de tourner dans les deux sens de rotation et des moyens (a à d) pour

transformer le mouvement de rotation dudit moteur électrique (M) en un mouvement de translation, en ce que lesdits moyens de transformation de mouvement commandent la translation du piston (e) dudit maître-vérin hydraulique (MV), en ce qu'une source (R1) de fluide sous pression est reliée par l'intermédiaire d'une pluralité de liaisons (p1 à pq) aux cylindres des vérins-esclaves (VE$_1$ à VE$_q$), du côté du piston de ceux-ci opposé aux conduites de liaison (g$_1$ à g$_q$) du maître-vérin (MV), et en ce que chaque vérin esclave (VE1 à VEq) est relié à une source (R2) de fluide sous pression atmosphérique, du côté de l'arrivée du fluide venant du maître-vérin (MV), la liaison entre la source (R2) et lesdits vérins-esclaves étant commandée par des électro-vannes (i$_x$, i$_1$ à i$_q$) sous la dépendance du dispositif de commande (DC).

2. Dispositif d'actionnement selon la revendication 1, caractérisé en ce que le moteur électrique (M), les moyens de transformation de mouvement (a à d), le maître-vérin hydraulique (MV), les électro-vannes (i$_1$ à i$_q$, i$_x$) et le dispositif de commande (DC) sont montés à poste fixe.

3. Automatisme comportant une pluralité d'organes mobiles combinés, caractérisé en ce que son dispositif d'actionnement est du type spécifié sous l'une quelconque des revendications 1 ou 2.

4. Automatisme selon la revendication 3, destiné à la détection et à la quantification, dans des récipients (13) dont au moins les fonds sont transparents, d'agglutinats susceptibles d'être formés, sous l'action d'au moins un réactif liquide, par des particules en suspension dans des doses de liquides à tester se trouvant dans lesdits récipients, automatisme comportant un agencement linéaire (35) d'une pluralité n d'éléments photosensibles observant par transparence les fonds (25) desdits récipients (13) contenant les éventuels agglutinats en balayant lesdits fonds des récipients, de façon à former n × m points d'observation répartis selon une surface rectangulaire ou carrée occupant la plus grande partie de la surface du fond de chaque récipient, lesdits récipients étant constitués d'alvéoles (13) répartis selon des rayons (19) d'un disque (12) horizontal transparent pouvant tourner autour de son axe vertical (11) et ledit automatisme comportant un bras oscillant (5) tournant autour d'un axe vertical (6) le long duquel il peut coulisser et pourvu de moyens (7) de prélèvement et de restitution de doses liquides, et prévu pour prélever de telles doses dans des réservoirs à réactifs (9) et à liquides à tester (26) et les amener dans lesdits alvéoles (13) du disque transparent (12), tandis que ledit agencement linéaire d'éléments photosensibles (35) est disposé horizontalement à poste fixe orthogonalement à un diamètre du disque (12) et que l'axe de rotation (11) du disque (12) est monté mobile en translation orthogonalement audit agencement (35) d'éléments photosensibles, caractérisé en ce que le coulissement dudit bras oscillant (5) le long de l'axe vertical (6), la rotation dudit bras (5) autour dudit axe (6), l'actionnement des moyens (7) de prélèvement et de restitution des doses liquides et la translation de l'axe de rotation (11) du disque (12) sont effectués par quatre vérins-esclaves (VE$_1$ à VE$_4$).

## Claims

1. Device for actuating an automatic device comprising a plurality of combined mobile members, this actuating device comprising a hydraulic master jack (MV) whose piston (e) is controlled in translation, a plurality of hydraulic ducts (g$_1$ to g$_q$) connected in parallel to the cylinder of said master jack (MV), a plurality of electro-valves (i$_1$ to i$_q$) each mounted on one of said hydraulic ducts, a device (DC) for controlling said electro-valves and a plurality of hydraulic slave jacks (VE$_1$ to VE$_q$) whose cylinders (h$_1$ to h$_q$) are each connected to one of said hydraulic ducts and whose pistons (j$_1$ to j$_q$) are each connected to one of said mobile members, characterized in that it comprises a single electric motor (M), for example of the stepping type, capable of rotating in both directions of rotation and means (a to d) for converting the movement of rotation of said electric motor (M) into a movement of translation, in that said movement converting means control the translation of the piston (e) of said hydraulic master jack (MV), in that a source of pressurized fluid (R1) is connected via a plurality of lines (P$_1$ to P$_q$) to the cylinders of the slave jacks (VE$_1$ to VE$_q$), on the piston side thereof opposite the connecting ducts (g$_1$ to g$_q$) of the master jack (MV), and in that each slave jack (VE$_1$ to VE$_q$) is connected to a source of fluid (R2) under atmospheric pressure, on the side of the intake of the fluid coming from the master jack (MV), the connection between said source (R2) and said slave jacks being controlled by electro-valves (i$_x$, i$_1$ to i$_q$) under the dependence of the control device (DC).

2. Actuating device according to claim 1, characterized in that the electric motor (M), the movement converting means (a to d), the hydraulic master jack (MV), the electro-valves (i$_1$ to i$_q$, i$_x$) and the control device (DC) are mounted in fixed manner.

3. Automatic device comprising a plurality of combined mobile members, characterized in that its actuating device is of the type specified in any one of claims 1 or 2.

4. Automatic device according to claim 3, for detecting and quantifying, in recipients (13) of which at least the bottoms are transparent, agglutinates likely to be formed under the action of at least one liquid reagent, by particles in suspension in doses of liquids to be tested contained in said recipients, said automatic device comprising a linear arrangement (35) of a plurality n of photosensitive elements observing by transparency the bottoms (25) of said recipients (13) containing the possible agglutinates by scanning said bottoms of said recipients, so as to form n × m points of observation distributed over a rectangular or square surface occupying the major part of the surface of the bottom of each recipient, said recipients being constituted by recesses (13) distributed along radii (19) of a horizontal transparent disc (12) adapted to rotate about its vertical axis (11) and said automatic device comprising an oscillating arm (5) rotating about a vertical axis (6) along which it may slide and provided with means (7) for taking and restoring liquid doses, and provided for taking such doses from reservoirs of reagents (9) and liquids to be tested (26) and for conducting them into said recesses (13) in the transparent disc (12), whilst said linear arrangement of photosensitive elements (35) is disposed horizontally in fixed manner at right angles to a diameter of the disc (12) and the axis of rotation (11) of the disc (12) is mounted to move in translation at right angles to said arrangement of photosensitive elements (35), characterized in that the slide of said oscillating arm (5) along the vertical axis (6), the rotation of said arm (5) about said axis (6), the actuation of the means (7) for taking and restoring the liquid doses and the translation of the axis of rotation (11) of the disc (12) are effectued by four slave jacks (VE₁ to VE₄).

## Patentansprüche

1. Antriebsvorrichtung für eine Automatik mit einer Vielzahl von kombinierten beweglichen Elementen, wobei diese Antriebsvorrichtung ein hydraulisches Hauptstellglied (MV) umfaßt, dessen Kolben (e) translatorisch gesteuert wird, einer Vielzahl von Hydraulikleitungen (g1 bis gq) parallel zum Hauptstellglied (MV), einer Vielzahl von jeweils in den Hydraulikleitungen angebrachten Magnetventilen (i1 bis iq), einer Steuervorrichtung (DC) für die Magnetventile und einer Vielzahl von hydraulischen Nebenstellgliedern (VE1 bis VEq), deren Zylinder (h1 bis hq) jeweils mit einer der Hydraulikleitungen verbunden sind und deren Kolben (j1 bis jq) jeweils mit einem der beweglichen Elemente verbunden sind, dadurch gekennzeichnet, daß sie einen einzigen Elektromotor (M), z. B. einen Schrittmotor, der sich in den beiden Drehrichtungen drehen kann, sowie Mittel (a bis d) zur Umwandlung der Drehbewegung des Elektromotors (M) in eine Translationsbewegung umfaßt, daß die Mittel zur Umwandlung der Bewegung die Translation des Kolbens (e) des hydraulischen Hauptstellglieds (MV) steuern, daß eine Fluidquelle (R1) unter Druck über eine Vielzahl von Verbindungen (p1 bis pq) mit den Zylindern der Nebenstellglieder (VE1 bis VEq) auf deren den Verbindungsleitungen (g1 bis gq) zum Hauptstellglied (MV) entgegengesetzter Seite verbunden ist, und daß jedes Nebenstellglied (VE1 bis VEq) mit einer Fluidquelle (R2) unter Atmosphärendruck auf der Ankunftsseite des vom Hauptstellglied (MV) kommenden Fluids verbunden ist, wobei die Verbindung zwischen der Quelle (R2) und den Nebenstellgliedern durch Magnetventile (ix, i1 bis iq) in Abhängigkeit von der Steuervorrichtung (DC) gesteuert wird.

2. Antriebsvorrichtung nach Anspruch 1, dadurch gekennzeichnet, daß der Elektromotor (M), die Mittel zur Umwandlung (a bis d), das hydraulische Hauptstellglied (MV), die Magnetventile (i1 bis iq, ix) und die Steuervorrichtung (DC) an festem Ort angebracht sind.

3. Automatik mit einer Vielzahl von kombinierten beweglichen Elementen, dadurch gekennzeichnet, daß ihre Antriebsvorrichtung vom in den Ansprüchen 1 oder 2 spezifizierten Typ ist.

4. Automatik nach Anspruch 3, vorgesehen für die Erfassung und quantitative Bestimmung von Agglutinaten, die unter Wirkung wenigstens eines flüssigen Reaktionsmittels durch Schwebepartikel in den zu testenden, sich in Gefäßen (13) befindenden Flüssigkeitdosen gebildet werden, wobei wenigstens die Böden der Gefäße (13) transparent sind, wobei die Automatik eine lineare Anordnung (35) mit einer Vielzahl n von photoempfindlichen Elementen umfaßt, die in abtastender Weise durch die Böden (25) der Gefäße (13) sehen, die die eventuellen Agglutinate enthalten, um somit n × m Beobachtungspunkte auf einer rechteckigen oder quadratischen Fläche zu bilden, die den größten Teil der Bodenfläche jedes Gefäßes einnimmt, wobei die Gefäße aus in Radien (19) einer horizontalen, transparenten Scheibe (12) verteilten Zellen (13) bestehen, wobei sich die Scheibe um ihre vertikale Achse (11) drehen kann, und wobei die Automatik einen oszillierenden Arm (5) umfaßt, der sich um eine vertikale Achse (6) dreht, entlang der er sich verschieben kann, und der mit Mitteln (7) zur Probenahme und Auswertung flüssiger Dosen versehen ist, um Proben aus derartigen zu untersuchenden Dosen in Reaktionsmittel- (9) und Flüssigkeitsgefäßen (26) zu nehmen und sie in die Zellen (13) der transparenten Scheibe (12) zu führen, während die lineare Anordnung der photoempfindlichen Elemente (35) in fester Position orthogonal einem Durchmesser der Scheibe (12) vorgesehen ist und die Drehachse (11) der Scheibe (12) translatorisch beweglich orthogonal zur linearen Anordnung (35) der photoempfindlichen Elemente angebracht ist, dadurch gekennzeichnet, daß die Verschiebung des oszillierenden Arms (5) entlang der vertikalen Achse (6), die Drehung des Arms (5) um die Achse (6), der Antrieb der Probenahme- und Auswertungsmittel (7) der Flüssigkeitsdosen und die Translation der Drehachse (11) der Scheibe (12) von vier Nebenstellgliedern (VE1 bis VE4) bewirkt werden.

*Fig. 1*

*Fig. 2*

## Fig.3

## Fig.4

**Fig.5**

**Fig.6**

Fig.7

0 176 643

Fig. 8

Fig. 9